# EUROPEAN PATENT SPECIFICATION

(11) **EP 0 740 061 B1**
(45) Date of publication and mention of the grant of the patent: **11.09.2002**
(21) Application number: 96106550.5
(22) Date of filing: 25.04.1996
(51) Int. Cl.: F02D 41/38, F02D 33/02, F02D 43/00

(54) **Electronic fuel injection control system and control method**
Elektronisch gesteuertes Kraftstoffeinspritzsystem und Verfahren zur Steuerung
Système électronique de commande d'injection de carburant et procédé de commande

(30) Priority: 28.04.1995 JP 12913395
(43) Date of publication of application: 30.10.1996
(73) Proprietor: Isuzu Motors Limited, Shinagawa-ku, Tokyo 140 (JP)
(72) Inventor: Makimoto, Takashi, Fujisawa-shi, Kanagawa (JP); Takeuchi, Makoto, Fujisawa-shi, Kanagawa (JP); Sanada, Masanori, Fujisawa-shi, Kanagawa (JP); Inoue, Shinichi, Fujisawa-shi, Kanagawa (JP); Uchiyama, Tadashi, Fujisawa-shi, Kanagawa (JP); Imai, Junichi, Fujisawa-shi, Kanagawa (JP); Kuroda, Kouichi, Fujisawa-shi, Kanagawa (JP)
(74) Representative: Kunz, Herbert, Dr.

(56) References cited:
- EP-A- 0 059 586
- US-A- 4 528 952
- PATENT ABSTRACTS OF JAPAN vol. 010, no. 189 (M-494), 3 July 1986 & JP 61 034324 A (TOYOTA MOTOR CORP), 18 February 1986,
- PATENT ABSTRACTS OF JAPAN vol. 009, no. 003 (M-349), 9 January 1985 & JP 59 153931 A (TOYOTA JIDOSHA KK), 1 September 1984,
- PATENT ABSTRACTS OF JAPAN vol. 008, no. 207 (M-327), 21 September 1984 & JP 59 096442 A (TOYOTA JIDOSHA KK), 2 June 1984,

## Description

This invention relates to an electronic fuel injection control system for minimizing decrease of power of a turbo-chargered diesel engine electronically controlled as to fuel injection and for avoiding discharge of smoke when vehicles having such engine are driven along a highland road. In addition, this invention also relates to a method for electronically control such system.

EP-A-0 059 586 discloses an engine control system which comprises a microprocessor for controlling the fuel delivery rate supplied to the engine. The control system includes several control maps for controlling injection timing and fuel delivery rate. The fuel delivery rate control maps consist of a torque rise limit map, a rack limit position map, a fuel/air limit map, and a single altitude derating map. The torque rise limit map, rack limit position map, and fuel/air limit map receive the actual engine speed as input whereas the altitude derating map is responsive to atmospheric pressure. The outputs of the torque rise limit map and the altitude derating map are applied to an adder. The output of the adder and the output of the rack limit position map are applied to a least-win logic selector which selects the lower of these two outputs for defining the actual fuel amount.

JP-A-59-153 931 discloses a fuel injection quantity controller for diesel engine. The controller calculates a basic injection quantity corresponding to engine speed and accelerator opening. The actual fuel injection quantity is obtained by comparing the basic injection quantity and an upper limit therefor obtained in accordance with suction pressure and its variation.

Generally, in a vehicle having a turbo-charge diesel engine in which fuel injection is electronically controlled, fuel injection quantity and fuel injection timing are controlled by a controller mainly comprising a computer. The fuel injection quantity is controlled according to various control maps previously installed in the computer. The control maps are roughly grouped into two types: one to be applied upon start of engine; and the other to be applied during driving. Contents of the maps are properly decided depending upon starting characteristics or driving characteristics required.

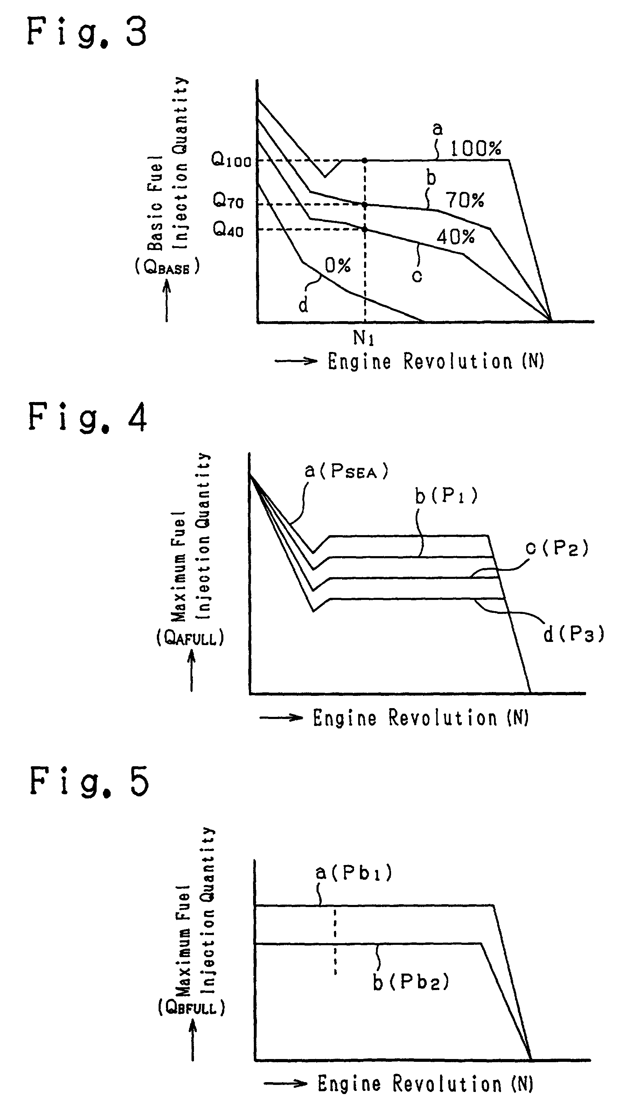

As control maps to be applied during driving, there are prepared, for example, a basic injection quantity control map, a boost pressure control map, an atmospheric pressure control map, etc. An actual injection quantity satisfies the requirements determined by these control maps. Each of these control maps are described in detail by reference to Figs. 3 to 5.

Fig. 3 is a graph showing one example of a basic injection quantity control map, with engine revolution (N) as abscissa and basic fuel injection quantity (Q_{BASE}) as ordinate. Curves of the map are drawn with accelerator pedal depression (c) as a parameter. This map is designed for determining the basic injection quantity based on engine revolution and accelerator pedal depression.

For example, when engine revolution is N₁ and accelerator pedal depression is 100 %, the basic injection quantity is determined to be Q₁₀₀. Similarly, when engine revolution is N₁ and accelerator pedal depression is 70 % or 40 %, the basic injection quantity is determined to be Q₇₀ or Q₄₀. Additionally, curve d corresponding to accelerator pedal depress ion of 0 % is a curve when the accelerator pedal is not depressed at all.

An actual injection quantity is determined by correcting the thus-determined basic injection quantity using the other control maps shown in Figs. 4 and 5.

Fig. 4 is a graph showing one example of the atmospheric pressure control map, with engine revolution as abscissa and maximum injection quantity, Q_{AFULL} (A: Atmosphere), as ordinate. This map is designed for determining maximum injection quantity corresponding to a particular atmospheric pressure at driving spot. In the graph, parameter of the control curve is atmospheric pressure. Curve a is a curve under the atmospheric pressure of P_{SEA} (atmospheric pressure at sea level, i. e., 760mmHg), and curves b, c and d are curves under the atmospheric pressures of P₁, P₂ and P₃ (provided that P_{SEA} > P₁ > P₂ > P₃). The maximum fuel injection quantity Q_{AFULL} is determined on the basis of atmospheric pressure and engine revolution.

Additionally, the basic fuel injection quantity map shown in Fig. 3 is usually prepared so that the quantity becomes optimal when the atmospheric pressure is P_{SEA}. Hence, curve a in Fig. 3 of 100 % in accelerator pedal depression (maximum injection quantity) corresponds to curve a in Fig. 4 under the atmospheric pressure of P_{SEA}.

The atmospheric pressure control map is prepared in view of the fact that a proper fuel injection quantity varies depending upon atmospheric pressure at a driving spot. For example, during driving along the beach, the basic fuel injection quantity map gives a proper fuel injection quantity but, when driving along a highland road (e.g., roads in Hakone or Mt. Fuji; typical mountaineous roads in Japan) under control of the map, the map fails to give a proper fuel injection quantity since the quantity of intake air introduced into cylnders, or the quantity of oxygen, is decreased. When the atmospheric pressure decreases, the proper injection quantity decreases. Therefore, when driving along highland roads with directly employing the basic fuel injection quantity control map, the fuel injection quantity becomes excess, thus resulting in discharge of smoke.

This atmospheric pressure control map is intended to decrease the maximum fuel injection quantity (i.e., injection quantity limit) as the atmospheric pressure decreases.

Fig. 5 is a graph showing an example of the boost pressure control map. This graph is designed to determine maximum fuel injection quantity depending upon the super-charged degree of the pressure inside intake air pipes in comparison with ambient atmospheric pressure. The curves are drawn with engine revolution as abscissa and maximum fuel injection quantity, Q_{BFULL} ( B: Boost), as ordinate. Boost pressure is used as a parameter of the control curves. Curve a is a curve when the boost pressure is Pb₁ (e.g., 300 mmHg), and curve b is a curve when the boost pressure is Pb₂ (e.g., 100 mmHg). The maximum fuel injection quantity Q_{BFULL} is determined on the basis of boost pressure and engine revolution.

As intake air is super-charged in turbo-chargered diesel engines, pressure inside the air intake pipes is higher than that of ordinary engines (natural-aspirated (NA) engines). Additionally, boost pressure P_{b} is determined by the formula of P_{B} - P_{A} wherein P_{B} represents an inside pressure of air intake pipes detected by a sensor for the inside pressure of air intake pipes, and P_{A} represents an atmospheric pressure detected by an atmospheric pressure sensor. (P_{B} Pressure detected by the sensor for inside pressure of air intake pipes = P_{A} atmospheric pressure + P_{b} boost pressure ).

In controlling the fuel injection quantity using the control maps in the above-described manner, the basic fuel injection quantity determined by Fig. 3 is designed not to exceed the maximum injection quantities determined by Figs. 4 and 5. That is, the smallest out of the following three quantities is decided as an actual fuel injection quantity:
(1) Basic fuel injection quantity Q_{BASE} determined by the control map in Fig. 3;
(2) Maximum fuel injection quantity Q_{AFULL} determined by the control map in Fig. 4; and
(3) Maximum fuel injection quantity Q_{BFULL} determined by the control map in Fig. 5.

Additionally, as literature on the prior art of electronic fuel injection control system for diesel engines, there is illustrated, for example, Japanese Patent Application Laid-open JP-A- S59-96442. This literature discloses to use absolute pressure within the air intake pipe for determining fuel injection quantity on the basis of control map.

However no countermeasures have so far been taken against change of the boost pressure due to change of the ambient atmospheric pressure. Therefore, there has been a problem that, in driving a vehicle having a turbo-chargered diesel engine along a highland road (e.g., 2,000 m above sea level), fuel injection quantity becomes excess, thus smoke being liable to be produced.

In the prior art, as the boost pressure control map (Fig. 5), only one map has been prepared that can be most optimally adapted when the atmospheric pressure is the atmospheric pressure of a low- and flat-land of P_{SEA} ( = 760 mmHg). In highlands where the atmospheric pressure is lower, the boost pressure increases in accordance with engine revolution in a different manner from that in a low- and flat-land. Hence, in driving along a highlandroad, the fuel injection quantity becomes excess and severe smoke is liable to be discharged if the injection quantity is controlled according to the boost pressure control map for driving along a low- and flat-land road.

Additionally, in the aforesaid Japanese Patent Application Laid-open JP-A- S59-96442, the pressure inside air intake pipe is detected in an absolute pressure, and hence contribution of the atmospheric pressure and the boost pressure to the absolute pressure is unknown. Therefore, when the detected absolute pressure is, for example, 760 mmHg, the same quantity of fuel is to be injected in the following two cases:
(1) atmospheric pressure = 560 mmHg and boost pressure = 200 mmHg; and
(2) atmospheric pressure = 760 mmHg and boost pressure = 0 mmHg.

In the above prior art electronic fuel injection controlling system for a diesel engine, a basic fuel injection quantity control map for determining basic injection quantity on the basis of engine revolution and accelerator pedal depression, a boost pressure control map for determining a first maximum fuel injection quantity on the basis of engine revolution and boost pressure, and an atmospheric pressure control map for determining a second maximum fuel injection quantity on the basis of engine revolution and atmospheric pressure are provided within the controller, the smallest quantity being selected from the three quantities determined by these maps, and fuel injection is effected in the thus determined quantity.

Thus, this prior art also fails to meet the fact that boost pressure in highlands increases differently from that in flat-and low-lands.

In order to solve the above-described problem, the present invention employs an electronic fuel injection control system as defined in claim 1.

In addition, this invention employs a method for electronically controlled fuel injection as defined in claim 2.

In the present invention, a plurality of boost pressure control maps are prepared corresponding to different atmospheric pressure levels. In determining the first maximum injection quantity, one of the boost pressure control maps corresponding to a detected atmospheric pressure is employed.

Thus, smoke is not discharged even when driving along a highland road where super-charging pressure increases in a different manner from that in driving along a low- and flat-land road, since a fuel is not injected in an excess amount.

### Brief Description of the Drawings

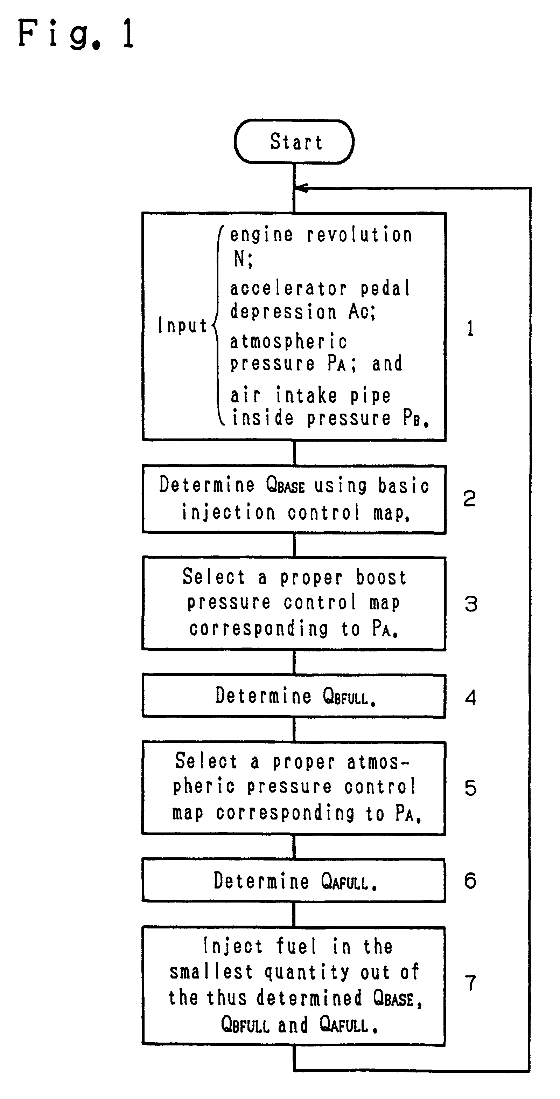

Fig. 1 is a flow chart for illustrating the method of the present invention for electronically controlled fuel injection.

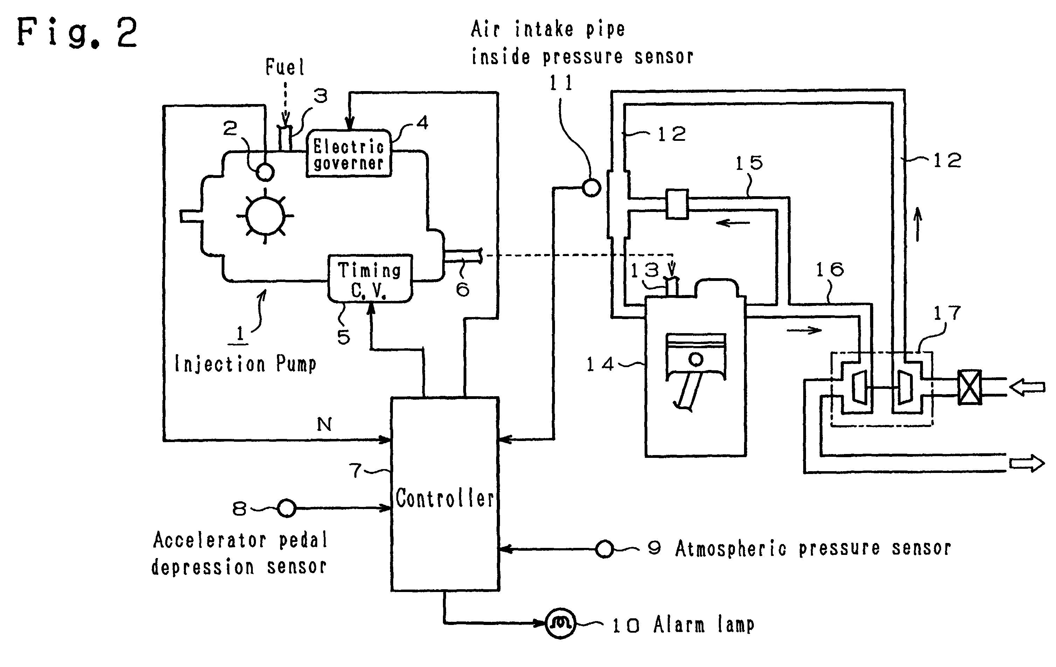

Fig. 2 is a block diagram showing the electronic fuel injection control system to which the method of this invention is applied.
Fig. 3 is a drawing showing one example of basic fuel injection quantity control map upon driving.
Fig. 4 is a drawing showing one example of atmospheric pressure control map.
Fig. 5 is a drawing showing one example of boost pressure control map.

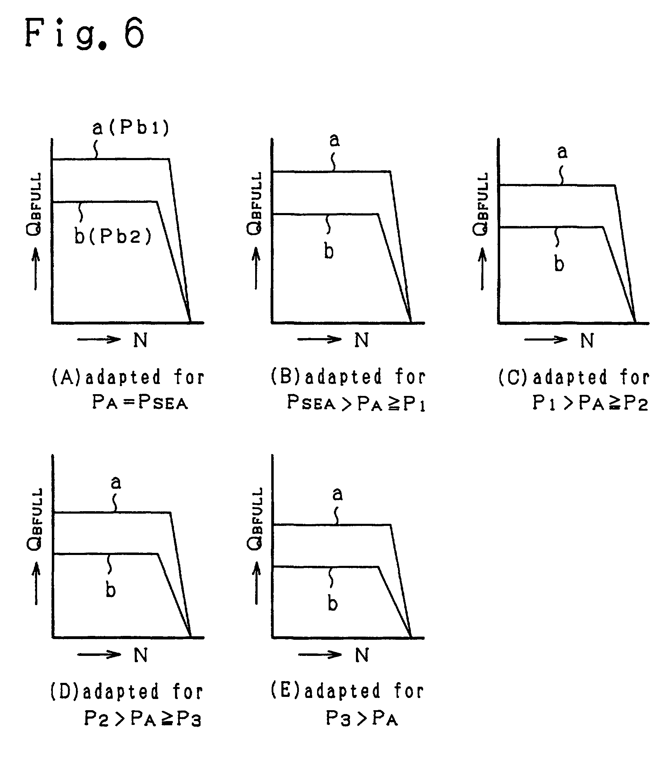

Fig. 6 is a drawing showing one example of a plurality of boost pressure control maps prepared for different atmospheric pressure levels.

### Best Mode of Carrying Out of the Invention

The present invention is now described in more detail by reference to drawings. Fig. 2 is a block diagram showing the electronic fuel injection controlling system of the present invention. Numeral 1 designates an injection pump, 2 an engine revolution sensor, 3 a fuel pipe, 4 an electric governer, 5 a timing control valve, 6 a fuel pipe, 7 a controller, 8 an accelerator pedal depression sensor, 9 an atmospheric pressure sensor, 10 an alarm lamp, 11 a sensor for pressure inside an air intake pipe, 12 an air intake pipe, 13 an injection nozzle, 14 a diesel engine, 15 an exhaust gas returning pipe, 16 an exhaust pipe, and 17 a turbo-charger. The atmospheric pressure sensor 9 may be provided outside or inside the controller 7. The engine is a turbo-chargered diesel engine. An air intake into the engine 14 is super-charged by the turbo-charger 17. The fuel is fed into the injection pump 1 through the fuel pipe 3, fed into the injection nozzle 13 through the fuel pipe 6, and injected into inside of the diesel engine 14. The injection quantity is controlled by the electric governer 4, and the injection timing is controlled by timing control valve 5.

Control signals to the electric governer 4 and the timing control valve 5 are generated in the controller 7 based on signals from various sensors and control maps previously installed in the controller 7. A signal for controlling injection quantity during driving is generated by applying, to various control maps as shown in Figs. 3 to 5, the engine revolution detected by the engine revolution sensor 2, the accelerator pedal depression detected by the accelerator pedal depression amount sensor 8, the atmospheric pressure detected by the atmospheric pressure sensor9, the pressure within the air intake pipe detected by the sensor 11 for pressure within the air intake pipe, etc.

In the present invention, however, not only a boost pressure control map shown in Fig. 5 corresponding to the atmospheric pressure of P_{SEA} (760 mmHg) but several additional maps for other different atmospheric pressure levels are provided in the controller 7 for the purpose of meeting the phenomenon that boost pressure corresponding to engine revolution increases in a different manner under different atmospheric pressure. Of the different naps, a proper one is selected to use that corresponds to the actual atmospheric pressure. Thus, even when driving along a highland road, a boost pressure control map corresponding to the driving spot is employed, thereby production of smoke, etc. being prevented.

Fig. 6 shows an example of a plurality of boost pressure control maps corresponding to different atmospheric pressure levels. Additionally, for the purpose of saving page space, drawings are reduced in the horizontal axis direction in comparison with Fig. 5. Fig. 6 (A) to (E) respectively represent the following:
Fig. 6 (A)···boost pressure control map when P _{A} = P_{SEA} (same as Fig. 5);
Fig. 6 (B)···boost pressure control map when P _{SEA} > P_{A} ≧ P₁;
Fig. 6 (C)···boost pressure control map when P₁ > P_{A} ≧ P₂;
Fig. 6 (D)···boost pressure control map when P₂ > P_{A} ≧ P₃;
Fig. 6 (E)···boost pressure control map when P₃ > P_{A}.

In this example, 5 boost pressure control maps are prepared. However, more maps may be prepared by dividing the atmospheric pressure into smaller zones. Actual values of P₁, P₂, etc. may properly be selected.

Fig. 1 is a flow chart for illustrating the method of the present invention for electronically controlled fuel injection quantity.
Step 1···Read the following detected signals into controller 7:
   engine revolution N detected by the engine revolution sensor 2;
   accelerator pedal depression A_{C} detected by the accelerator pedal depression sensor 8;
   atmospheric pressure P_{A} detected by the atmospheric pressure sensor 9; and
   air intake pipe inside pressure P_{B} detected by the sensor 11 for air intake pipe inside pressure.
Step 2···Determine basic fuel injection quantity Q_{BASE} by applying the engine revolution N and accelerator pedal depression A_{c} to the basic fuel injection control map shown in Fig. 3.
Step 3···Select a proper boost pressure control map among the boost pressure control maps shown in Fig. 6, which corresponds to the detected atmospheric pressure P_{A}. For example, when value of the detected atmospheric pressure is P₂, select the map of Fig. 6 (C).
Step 4···Determine maximum fuel injection quantity Q_{BFULL} by applying the boost pressure ( P_{b} = P_{B} - P_{A}) and the engine revolution N to the thus selcted boost pressure control map.
Step 5···Select a proper atmospheric pressure control curve out of the curves shown in Fig. 4. For example, when value of the detected atmospheric pressure P_{A} is P₂, select curve (c).
Step 6···Determine maximum fuel injection quantity Q_{AFULL} by applying the detected engine revolutionN to the thus selected curve (c) in Fig. 4.
Step 7···Compare the thus determined basic fuel injection quantity Q_{BASE} , maximum fuel injection quantity Q_{AFULL} and maximum fuel injection quantity Q_{BFULL} with each other to determine the smallest quantity, and control injection based on the smallest quantity.

Additionally, though the basic fuel injection quantity Q_{BASE}, the maximum fuel injection quantity Q_{BFULL} , and the maximum fuel injection quantity Q_{AFULL} are determined in this order in the above description, any of them may be determined first, and the order is not limitative at all.

As has been described hereinbefore, in the present invention, a plurality of boost pressure control maps are prepared corresponding to different atmospheric pressure levels and in determining the first maximum injection quantity, one of the boost pressure control maps corresponding to a detected atmospheric pressure is employed.

Therefore the system and the method of this invention for electronically controlled fuel injection enable not to feed fuel in excess amount even when driving along a highland road where atmospheric pressure is lower than in a low- and flat-land road and therefore super-charging pressure increases differently from the latter, thus smoke discharge being effectively prevented.

## Claims

1. An electronic fuel injection control system having an engine revolution sensor, an accelerator pedal depression sensor, an atmospheric pressure sensor, an air intake pipe inside pressure sensor, a basic fuel injection quantity control map for determining basic fuel injection quantity based on the engine rotational number and the accelerator pedal depression, boost pressure control map for determining first maximum fuel injection quantity based on the engine revolution and boost pressure, an atmospheric pressure control map for determining second maximum fuel injection quantity based on the engine revolution and the atmospheric pressure, and an injection quantity-controlling means for injecting fuel in the smallest quantity of the three quantities respectively determined by said three maps,
wherein a plurality of boost pressure control maps are provided as said boost pressure control map corresponding to different atmospheric pressure levels.

2. A method for electronically controlled fuel injection by selecting the smallest quantity out of three injection quantities of a basic fuel injection quantity, a first maximum fuel injection quantity, and a second maximum fuel injection quantity respectively determined from a basic fuel injection quantity control map for determining the basic fuel injection quantity based on engine revolution and accelerator pedal depression, a boost pressure control map for determining the first maximum fuel injection quantity based on engine rotational number and boost pressure, and an atmospheric pressure control map for determining the second maximum fuel injection quantity based on engine revolution and atmospheric pressure,
wherein a proper boost pressure control map is selected in accordance with a detected atmospheric pressure as said boost pressure control map from a plurality of boost pressure control maps for different atmospheric pressure levels.

## Patentansprüche

1. Elektronisches Brennstoffeinspritzsteuersystem mit einem Motordrehzahlsensor, einem Beschleunigungspedalbetätigungssensor, einem Atmosphärendrucksensor, einem Luftansaugrohr-lnnendrucksensor, einem Brennstoffeinspritz-Grundmengen-Steuerkennfeld zum Bestimmen einer Brennstoffeinspritz-Grundmenge auf der Grundlage der Motordrehzahl und der Beschleunigungspedalbetätigung, einem Ladedruck-Steuerkennfeld zum Bestimmen einer ersten maximalen Brennstoffeinspritzmenge auf der Grundlage der Motordrehzahl und des Ladedrucks, einem Atmosphärendruck-Steuerkennfeld zum Bestimmen einer zweiten maximalen Brennstoffeinspritzmenge auf der Grundlage der Motordrehzahl und des Atmosphärendrucks, und einer Einspritzmengen-Steuereinrichtung zum Einspritzen von Brennstoff mit der kleinsten Menge aus den drei jeweils anhand der Kennfelder bestimmten Mengen,
wobei eine Mehrzahl von unterschiedlichen Atmosphärendruckpegeln entsprechenden Ladedruck-Steuerkennfeldern als das Ladedruck-Steuerkennfeld vorgesehen sind.

2. Verfahren zur elektronisch gesteuerten Brennstoffeinspritzung durch Auswählen der kleinsten Menge von drei Einspritzmengen gemäß einer Brennstoffeinspritz-Grundmenge, einer ersten maximalen Brennstoffeinspritzmenge, und einer zweiten maximalen Brennstoffeinspritzmenge, die jeweils anhand eines Brennstoffeinspritz-Grundmengen-Steuerkennfelds zum Bestimmen der Brennstoffeinspritz-Grundmenge auf der Grundlage der Motordrehzahl und der Beschleunigungspedalbetätigung, eines Ladedruck-Steuerkennfelds zum Bestimmen der ersten maximalen Brennstoffeinspritzmenge auf der Grundlage der Motordrehzahl und des Ladedrucks, und eines Atmosphärendruck-Steuerkennfelds zum Bestimmen der zweiten maximalen Brennstoffeinspritzmenge auf der Grundlage der Motordrehzahl und des Atmosphärendrucks, bestimmt werden,
wobei ein geeignetes Ladedruck-Steuerkennfeld als das Ladedruck-Steuerkennfeld in Abhängigkeit von einem erfaßten Atmosphärendruck aus einer Mehrzahl von Ladedruck-Steuerkennfeldern für unterschiedliche Atmosphärendruckpegel ausgewählt wird.

## Revendications

1. Un système électronique de commande d'injection de carburant comprenant un capteur de révolution du moteur, un capteur de dépression de pédale d'accélérateur, un capteur de pression atmosphérique, un capteur de pression a l'intérieur de pipe d'entrée d'air, un plan de commande de quantité fondamentale d'injection de carburant pour determiner de quantité fondamentale d' injection de carburant basée sur le nombre de rotation de moteur et la dépression de pédale d'accélérateur, plan de commande de pression chargeant pour determiner premier quantité maximale d'injection de carburant basée sur le nombre de rotation de moteur et pression chargeant, un plan de commande de pression atmosphérique pour determiner deuxième quantité maximale d'injection de carburant basée sur le nombre de rotation de moteur et pression atmosphérique, et moyens pour commander la quantité d'injection pour injecter le carburant dans la plus petite quantité des trois quantités respectivement déterminées par lesdites trois plans,
où une pluralité de plans de commande de pression chargeant sont fournies comme dit plan de commande de pression chargeant correspondant à différents niveaux de pression atmosphérique.

2. Une méthode pour injection de carburant commandé électronique par selectionner la plus petite quantité hors trois quantités d'injection comprenant une quantité fondamentale d' injection de carburant, une premier quantité maximale d'injection de carburant, et une deuxième quantité maximale d'injection de carburant respectivement déterminées par un plan de commande de quantité fondamentale d' injection de carburant pour determiner la quantité fondamentale d' injection de carburant basée sur le nombre de rotation de moteur et la dépression de pédale d'accélérateur, un plan de commande de pression chargeant pour déterminer la premier quantité maximale d'injection de carburant basée sur le nombre de rotation de moteur et pression chargeant, et un plan de commande de pression atmosphérique pour déterminer la deuxième quantité maximale d'injection de carburant basée sur le nombre de rotation de moteur et pression atmosphérique,
où un plan approprié de commande de pression chargeant est choisi, selon un pression atmosphérique detecté, comme ledit plan de commande de pression chargeant d'une pluralité de plans de commande de pression chargeant pour différents niveaux de pression atmosphérique.
